# FASCICULE DE BREVET EUROPEEN

(11) **EP 4 060 206 B1**
(45) Date de publication et mention de la délivrance du brevet: **08.03.2023**
(21) Numéro de dépôt: 22154232.7
(22) Date de dépôt: 31.01.2022
(51) Int. Cl.: F16H 25/20, F16H 25/24

(54) **DISPOSITIF DE BLOCAGE MÉCANIQUE D'UN MOUVEMENT LINÉAIRE ENTRE DEUX STRUCTURES**
MECHANISCHE VORRICHTUNG ZUM BLOCKIEREN EINER LINEAREN BEWEGUNG ZWISCHEN ZWEI STRUKTUREN
DEVICE FOR MECHANICAL LOCKING OF A LINEAR MOVEMENT BETWEEN TWO STRUCTURES

(30) Priorité: 17.03.2021 FR 2102650
(43) Date de publication de la demande: 21.09.2022
(73) Titulaire: REEL, 69450 Saint-Cyr au Mont d'Or (FR)
(72) Inventeur: ECOCHARD, Michel, 69970 CHAPONNAY (FR)
(74) Mandataire: Cabinet Laurent & Charras

(56) Documents cités:
- EP-A1- 0 265 316
- EP-A1- 3 403 703
- EP-B1- 0 171 405
- WO-A1-95/10716

## Description

### DOMAINE DE L'INVENTION

L'invention concerne un dispositif apte à autoriser le déplacement relatif de deux structures l'une par rapport à l'autre dans des conditions normales d'utilisation ou de situation et, corollairement, à bloquer ce déplacement lorsque lesdites conditions dites normales ne sont plus remplies. Ce dispositif a notamment pour vocation de protéger tout ou partie des éléments constitutifs desdites structures.

Elle trouve notamment application :
■ dans le cadre de mécanismes oscillants de type balancier, pour permettre le blocage du mouvement dudit balancier en cas de déséquilibre rapide, tel que par exemple dans le domaine des treuil de levage ;
■ dans le cadre de butées sismiques ;
■ dans le cadre des butées de clapets / portes aérauliques / hydrauliques, en vue de bloquer ce système en cas de sollicitations brusques inhérentes aux vents violents, explosions etc. ;
■ dans le cadre de la protection des mécanismes des portes, trappes ou écoutilles, en vue de la protection des mécanismes d'ouverture en cas d'explosion ou de sollicitation exceptionnelle ;
■ dans le cadre de la stabilisation d'équipement soumis à de fortes accélérations dans le domaine de l'aéronautique, du maritime et des véhicules terrestres ;
■ dans le cadre des supports de tuyauterie aptes à permettre les phénomènes de dilatation, tout en bloquant de tels supports en cas de sollicitation dynamique.

### ART ANTERIEUR

La problématique née de la protection de structures liées entre elle, existe depuis longtemps déjà. Cette problématique a notamment concerné, et au demeurant concerne toujours, le domaine sismique, domaine dans lequel on souhaite préserver l'ouvrage ou bâtiment de génie civil, ou les structures qu'il comporte des accélérations violentes inhérentes aux tremblements de terre. Dans ce contexte, on souhaite conférer audit ouvrage ou aux structures qu'il comporte (telles que les canalisations, etc.) un certain degré de liberté et de déplacement inhérent notamment aux phénomènes de dilatation.

De fait, de très nombreuses publications ont abordé cette problématique dite des butées sismiques. Traditionnellement, ces butées sismiques intègrent des moyens hydrauliques à fonction d'amortissement, de type vérins. Outre l'encombrement conséquent qu'ils génèrent, la faculté de fixer le seuil d'accélération au-delà duquel de tels vérins deviennent bloquants, c'est-à-dire interdisent le mouvement relatif de l'ouvrage ou des structures de l'ouvrage par rapport à son point de fixation, est délicate à mettre en oeuvre pour des applications autres que les butées sismiques.

On a également proposé la mise en oeuvre de dispositifs purement mécaniques, comme par exemple dans le document EP 0 171 405. Ce dispositif fonctionne en mettant en oeuvre l'inertie résultant de la mise en rotation d'un élément mobile, consécutif à un déplacement relatif des deux structures auxquelles ledit dispositif est solidarisé, entraînant l'engrènement d'une denture à rochet avec une partie rotative et une partie fixe, générant le blocage de la rotation, et donc corollairement, le blocage de la translation. Lors de l'engrènement, il y a choc et usure au niveau des dentures. En outre, le blocage ne devient effectif qu'après une course significative des éléments portant les dentures respectives. En effet, outre la hauteur des dentures, il convient de rajouter le jeu fonctionnel, conduisant à une distance trop importante pour limiter les effets d'amplification dynamique. Enfin, dans le dispositif décrit, il n'existe qu'une vis susceptible de se déplacer dans les deux sens, et corollairement de se bloquer, entraînant un couple de torsion sur la vis difficilement compatible avec les efforts importants, réduisant en conséquence les applications envisageables d'un tel dispositif.

L'objectif recherché par la présente invention est de disposer d'un dispositif également purement mécanique, et donc excluant tout effort hydraulique ou pneumatique, tout à la fois simple à mettre en oeuvre et susceptible d'être configuré pour fonctionner en traction, en compression, voire en traction/compression, et ce, dans des plages importantes d'efforts, variant typiquement de quelques kilos à plusieurs centaines de tonnes.

### EXPOSE DE L'INVENTION

L'invention vise ainsi un dispositif de blocage mécanique d'un mouvement linéaire entre deux structures, ce dispositif comprenant :
■ un premier élément solidaire de l'une desdites structure ;
■ un second élément solidaire avec ou en appui contre l'autre desdites deux structures.

Selon l'invention, lesdits premier et second éléments coopèrent linéairement l'un avec l'autre au moyen d'un double couple vis-écrou coaxiaux :
■ un premier couple vis-écrou constitué d'une vis dite réversible et d'un écrou coopérant sans contrainte ou quasiment sans contrainte avec ladite vis réversible ;
■ un second couple vis-écrou constitué d'une vis dite irréversible et d'un écrou coopérant avec ladite vis irréversible, la coopération entre ces deux éléments présentant un jeu déterminé ;
l'un des éléments du premier couple étant solidaire de l'un des éléments du second couple, de sorte que la rotation de l'un inhérente au déplacement linéaire relatif dudit premier élément par rapport au second élément, entraîne la rotation de l'autre.

Ce dispositif comprend également au moins un moyen élastique, apte à agir sur l'un des éléments constitutifs des couples vis-écrou précités, de telle sorte :
■ à maintenir le jeu vis-écrou dudit second couple lorsque la contrainte est inférieure à un seuil fixé par construction, ladite contrainte correspondant à une vitesse de rotation de l'un des éléments du couple ; et
■ à engendrer le blocage de la coopération des éléments du second couple vis irréversible-écrou au-delà dudit seuil de contrainte.

En d'autres termes, l'invention consiste à jouer sur le jeu, certes limité, mais existant par construction entre la vis dite irréversible et l'écrou qui lui est associé pour, en fonction d'une contrainte déterminée inhérente à la vitesse de rotation de l'ensemble, rotation elle-même inhérente au déplacement linéaire relatif entre les deux structures entre lesquelles est monté le dispositif de l'invention, autoriser la rotation de la vis irréversible au sein de l'écrou correspondant ou au contraire, la bloquer, le moyen élastique étant destiné à assurer le centrage de ladite vis irréversible par rapport à l'écrou associé, et corollairement permet de fixer, en fonction de ses caractéristiques (la constante de raideur s'il s'agit d'un ressort), le seuil au-delà duquel le dispositif devient bloquant.

Selon un mode de réalisation de l'invention, la vis réversible du premier couple est solidaire de la vis irréversible du second couple, et le moyen élastique est solidarisé aux deux écrous de chacun desdits couples.

Selon une autre variante, la vis irréversible du second couple est solidaire de l'écrou du premier couple (vis réversible-écrou), et le moyen élastique agit sur la vis réversible.

L'invention vise également une butée de mécanisme oscillant, et une butée sismique mettant en oeuvre un tel dispositif.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
Les figures 1 et 2 illustrent schématiquement le principe de fonctionnement du dispositif de l'invention, respectivement en mode libre et en mode bloqué.
Les figures 3 et 4 représentent schématiquement une application particulière du principe de fonctionnement du dispositif de l'invention, respectivement en mode libre et en mode bloqué.
La figure 5 est une vue schématique de l'extrémité supérieure d'un treuil de levage, dont la figure 6 est une vue de détail, et dont la figure 7 illustre le dispositif de l'invention appliqué à un tel treuil.
La figure 8 illustre une autre application de l'invention, en l'espèce un bloqueur sismique, susceptible de fonctionner en mode traction/compression.
La figure 9 illustre une autre application de l'invention, à destination d'un pont roulant.
La figure 10 illustre là encore l'application du dispositif de l'invention dans la cadre du domaine sismique, mais en mode de reprise horizontale, mettant en oeuvre quatre dispositifs illustrés sur la figure 9.
La figure 11 est une représentation schématique de la partie supérieure de la figure 7, mais dans laquelle la vis dite réversible est susceptible de se déplacer dans les deux sens.

### DESCRIPTION DETAILLEE DE L'INVENTION

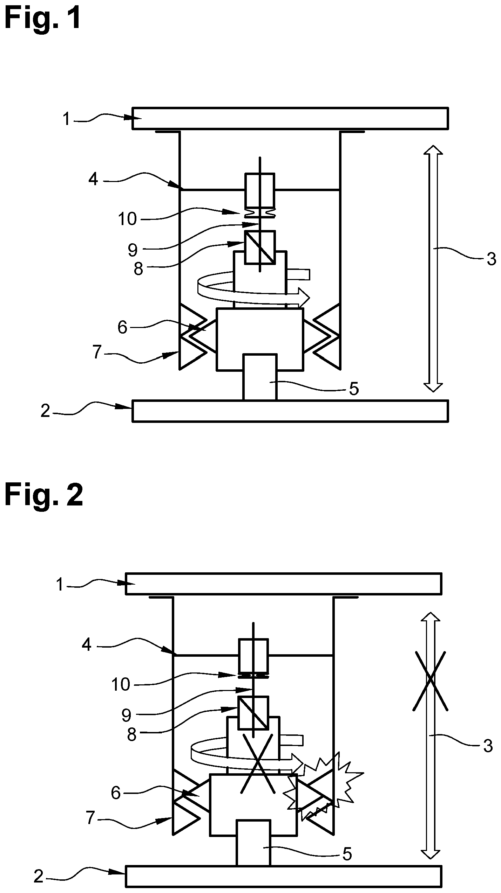

Les figures 1 et 2 représentent schématiquement le principe de fonctionnement du dispositif de l'invention.

Ce dispositif est donc destiné à interagir entre deux structures (1) et (2), et plus spécifiquement à réguler le déplacement relatif de l'une par rapport à l'autre. En l'espèce, le déplacement que l'on souhaite réguler est un déplacement linéaire, illustré par la flèche de droite (3).

A l'aide du dispositif de l'invention, ce déplacement linéaire va être converti au sein du dispositif, en un mouvement de rotation de partie des éléments constitutifs dudit dispositif. Dans ce schéma de principe, l'un des éléments, en l'espèce constitué d'un carter (4), est solidaire de la structure (1), alors que l'autre élément prend appui, par exemple par l'intermédiaire d'un poussoir (5), contre la seconde structure (2). Alternativement, ce second élément pourrait, pour certaines applications, être solidaire de ladite seconde structure (2).

Ce poussoir (5), dans l'hypothèse d'un rapprochement de la structure (2) en direction de la structure (1), engendre la rotation d'une vis (6), dite vis irréversible, la liaison entre ledit poussoir et la vis (6) étant libre en rotation, mais bloquée en translation.

La vis irréversible (6) coopère avec un écrou dit également irréversible (7), solidaire du carter (4) qui, comme déjà dit, est lui-même solidaire de la structure (1). Cette vis irréversible (6) est par ailleurs solidaire d'un écrou dit réversible (8), de sorte que la rotation de la vis irréversible (6) entraîne la rotation de l'écrou réversible (8). Cet écrou réversible (8) est à son tour lui-même apte à tourner autour d'une vis dite réversible (9). Cette notion de réversibilité s'entend comme l'absence ou quasi-absence de contrainte mécanique lors de la coopération de la vis réversible (9) avec l'écrou réversible (8).

La vis réversible (9) est elle-même en liaison élastique (10) avec le carter (4). Cette liaison élastique résulte typiquement de l'action d'un ressort, tel qu'au demeurant, il sera revenu ci-après.

Cette liaison élastique permet d'assurer le centrage de la vis irréversible (6) par rapport à l'écrou irréversible (7), et donc corollairement la libre rotation de ladite vis (6) au sein de l'écrou (7), ou au contraire, le blocage de celle-ci.

Ainsi, le tarage du ressort constitutif de la liaison élastique (10) permet de définir le seuil de contrainte au-delà duquel il y a blocage de la rotation de la vis irréversible (6) au sein de l'écrou irréversible (7) (figure 2), blocage inhérent à un contact trop intime, et corollairement un frottement trop intense, entre le filet de la vis irréversible (6) sur le taraudage de l'écrou irréversible (7), bloquant de facto toute possibilité de déplacement axial (3) entre les deux structures.

Plus précisément, le fonctionnement d'un tel dispositif est basé sur la modification de la longueur apparente de ladite liaison élastique. Cette variation de longueur est inhérente à une modification de l'état de contrainte de ladite longueur élastique. Ainsi, lors des mouvements relatifs des deux structures selon la flèche (3), un élément du système irréversible, en l'espèce la vis irréversible (6), est entraîné en rotation, et cette mise en rotation occasionne un effort résistant, directement dépendant de la masse de ladite vis (6) en mouvement et de l'accélération imprimée au mécanisme. L'étalonnage du ressort, et par exemple le choix de sa constante de raideur, est fonction de la masse de l'organe mobile, en l'espèce la vis (6) et de la limite d'accélération maximum acceptable.

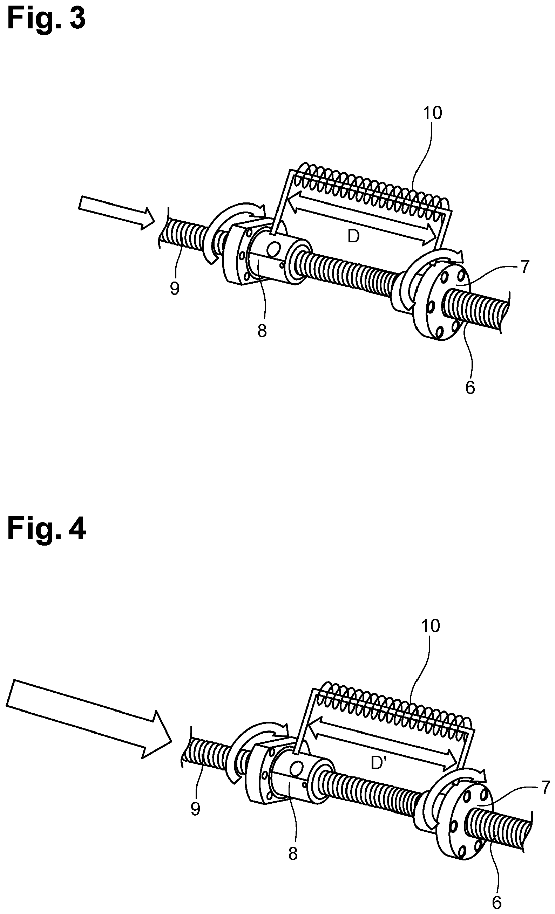

Les figures 3 et 4 illustrent un autre schéma de principe de l'invention. En l'espèce, la vis réversible (9) et la vis irréversible (6) sont colinéaires et solidaires l'une de l'autre. En revanche, leur pas de vis diffère, puisqu'aussi bien, le pas de vis de la vis réversible (9) est destiné à coopérer avec un écrou typiquement à billes, donc apte à opposer le moins de résistance possible à sa libre rotation, alors même que la vis irréversible (6) est une vis à pas trapézoïdal par exemple, seul le jeu spécifique existant entre la vis irréversible (6) et l'écrou irréversible (7) n'apparaissant pas sur les figures.

Dans cette représentation schématique, les deux écrous, respectivement réversible (8) et irréversible (7) sont liés en rotation, c'est-à-dire que la rotation de l'un entraîne la rotation de l'autre, sous réserve que le ressort précontraint (10), que l'on a illustré également sur les deux schémas, ne subisse pas une contrainte trop importante née du rapprochement de la distance D illustrée également sur les schémas. Cette distance D, et donc la constante de raideur du ressort (10) est telle, que le jeu vis/écrou irréversibles (6, 7) est centré, et en conséquence, autorise la libre ou quasi-libre rotation de l'un par rapport à l'autre.

Ainsi, en fonctionnement normal, c'est-à-dire pour une poussée (flèche de gauche sur les figures) inférieure à une valeur seuil, déterminée par la constante de raideur du ressort (10), la rotation de l'écrou réversible (8) engendrée par le déplacement linéaire de la vis réversible (9), entraine simultanément la rotation de l'écrou irréversible (7). Le ressort (10) induit le maintien de la distance D entre les deux écrous et cette distance D, et donc corollairement le tarage du ressort, est telle que le jeu vis/écrou de la vis irréversible ou trapézoïdale est centré, propre à permettre la libre ou quasi-libre rotation de l'écrou (7) sur la vis (6). Les deux écrous se déplacent donc de manière identique. Dans ce fonctionnement normal, l'effort nécessaire pour accélérer l'écrou irréversible (6) doit être inférieure à la précontrainte engendrée par le ressort (10).

Si, en revanche (figure 4), l'effort sur la vis réversible (9) est trop important, et notamment supérieur à un seuil déterminé par la constante de raideur du ressort (10), cela induit une vitesse V de rotation telle de l'écrou réversible (8), et corollairement celle de l'écrou irréversible (7), que la distance D', alors inférieur à D, n'est plus maintenue par le ressort (10), induisant le rattrapage du jeu entre les filetages de l'écrou irréversible (7) sur la vis irréversible (6), et corollairement le blocage de la rotation de l'une au sein de l'autre, et donc, l'arrêt immédiat du déplacement relatif entre les deux structures (non représentées sur les figures 3 et 4) auxquelles le dispositif est solidarisé.

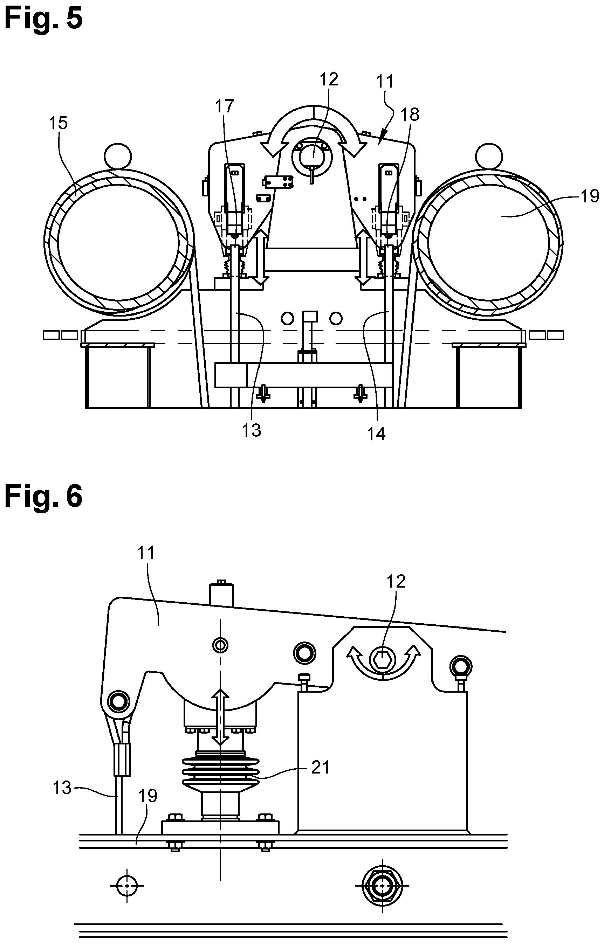

On a représenté en relation avec les figures 5, 6 et 7, une application particulière du dispositif de l'invention à un treuil de levage, et plus précisément à une butée de mécanisme oscillant.

Un treuil de levage comporte classiquement un palonnier (11) d'équilibrage, articulé autour d'un axe (12), et aux deux extrémités duquel sont solidarisés deux câbles de levage (13, 14). L'une des extrémités de chacun de ces deux câbles vient s'enrouler sur des tambours de levage (15, 16), l'autre extrémité (17, 18) desdits câbles étant reliée aux deux extrémités du palonnier sur un dispositif de l'invention, après mouflage par exemple sur un crochet auquel est fixée une charge (non représentés). En l'espèce, l'objectif recherché par la mise en oeuvre du dispositif de l'invention au niveau d'un tel treuil est de bloquer l'oscillation du palonnier en cas d'accélération de ladite oscillation au-delà d'un seuil déterminé, et résultant par exemple de la rupture de l'un des câbles, ou de la chute intempestive de la charge.

En fonctionnement normal, le palonnier doit pouvoir osciller afin d'équilibrer la tension dans les câbles de levage (13, 14). En cas de rupture de l'un desdits câbles, l'équilibre est rompu et le palonnier bascule brutalement du côté du câble encore actif, jusqu'à venir en butée contre le châssis fixe (19) du treuil. Cette mise en butée brutale engendre des efforts dynamiques très importants, susceptible de mettre en péril l'intégrité de la chaine de levage, et corollairement la sûreté de la charge suspendue.

L'objectif recherché par la mise en oeuvre du dispositif de l'invention au niveau du palonnier, est de bloquer quasiment instantanément ce dernier en cas d'accélération de l'oscillation de ce dernier, au-delà d'un seuil limite déterminé par construction, et ainsi préserver l'intégrité de la chaine de levage.

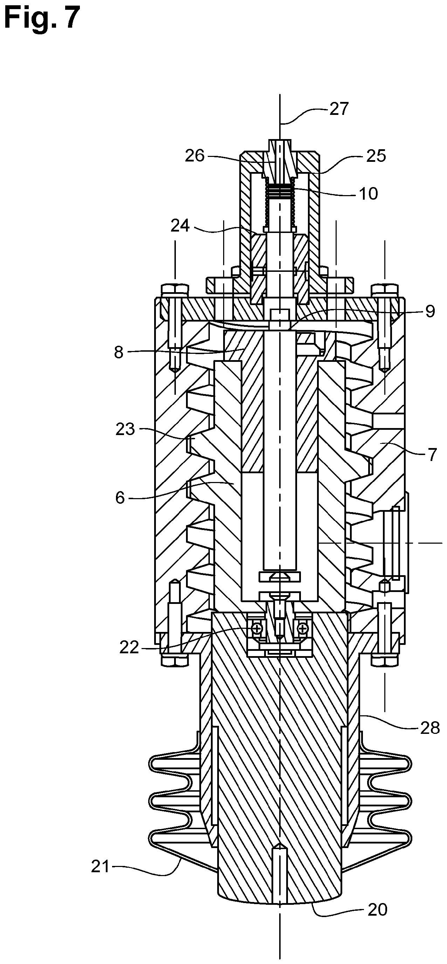

Plus précisément, la première structure (1) du dispositif de l'invention est donc constituée par l'une des extrémités du palonnier, et la seconde structure (2) prend appui sur le châssis (19) du treuil. La figure 7 illustre plus précisément le dispositif de l'invention dans le cadre de cette application.

Au sein de cette figure 7, on a représenté, par la référence (20), le poussoir venant prendre appui sur le châssis (19) du treuil. Ce poussoir (20) est avantageusement protégé par un soufflet (21) contre les poussières ambiantes, et est en outre guidé au sein d'un fourreau (28) solidaire d'un corps (7), faisant fonction d'écrou irréversible. Le poussoir (20) est solidarisé à la vis irréversible (6) par un ensemble mécanique (22) apte à assurer une liaison libre en rotation mais bloquée en translation entre ces deux éléments. En d'autres termes, cette liaison empêche le poussoir (20) d'entrer en rotation, mais autorise la rotation de la vis irréversible (6).

La vis irréversible (6) solidarisée au poussoir (20) est reçue au sein d'un corps taraudé, faisant fonction d'écrou irréversible (7), et solidarisé au palonnier (11), par l'intermédiaire d'une liaison articulée (non représentée). Le filetage du corps (7) est adapté au filetage externe de la vis irréversible (6). Plus spécifiquement, la vis irréversible (6) présente un nombre de filets (23) limité, en l'espèce deux, afin de permettre au dispositif de l'invention de fonctionner.

Cette vis irréversible (6) est solidaire de l'écrou réversible (8). Comme le corps (7) est statique en raison de sa solidarisation au palonnier (11), et en outre en raison de la liaison (22) entre le poussoir (20) et ladite vis irréversible (6), le déplacement du poussoir (20) engendre la rotation de la vis irréversible (6) en raison de sa coopération avec le corps (7), et donc corollairement la rotation de l'écrou réversible (8). Ledit écrou réversible (8) tourne sur une vis réversible (9), coaxiale avec l'écrou réversible, avec la vis irréversible et avec l'écrou irréversible. Par ailleurs, la vis réversible (9) est bloquée en rotation, mais pas en translation, par une entretoise de blocage (24), intégrée dans une cloche de maintien (25), solidaire du corps (7).

Enfin, un ressort de tarage (10), prenant appui sur ladite vis réversible (9), est également reçu dans la cloche de maintien (25), où il interagit avec une vis de tarage (26), destinée à comprimer plus ou moins ledit ressort (10), et donc à permettre de fixer le seuil de contrainte mentionné précédemment.

La cloche (25) maintient ainsi en translation la vis de tarage (26) et en rotation l'entretoise de blocage (24).

Ce faisant, pendant les phases de vitesse de progression du piston, et donc d'accélération inférieures à une valeur seuil, en raison du choix des couples respectifs écrou réversible-vis réversible d'une part, et écrou irréversible-vis irréversible d'autre part, la résistance opposée au mouvement de rotation précédemment décrit est réduite.

En revanche, si l'accélération du piston, par exemple inhérente à une rupture de l'un des câbles (13, 14), dépasse ladite valeur seuil, se traduisant par l'accélération de la rotation de l'ensemble vis irréversible (6) - écrou réversible (8), une résistance se crée entre les filets (23) de ladite vis irréversible contre les filets de l'écrou irréversible ou corps (7), qui vient donc bloquer ladite rotation de la vis irréversible au sein de l'écrou irréversible et, corollairement, le mouvement de translation selon l'axe (27) du dispositif.

Ainsi, aussi longtemps que les phases d'accélération génèrent un effort inférieur à l'effort de tarage du ressort (10), le mécanisme est totalement réversible et ne s'oppose pas au mouvement de translation selon ledit axe (27).

En revanche, lorsque l'effort généré par l'accélération est supérieur à l'effort de tarage du ressort (10), la position axiale de la vis réversible (9) est modifiée et, corollairement, celui de la vis irréversible (6), de sorte que le jeu entre les filets (23) de la vis irréversible (6) et ceux de l'écrou irréversible ou corps (7) n'est plus maintenu, engendrant un frottement apparaissant sur les flancs des filets et, corollairement, le blocage en rotation de ladite vis irréversible, et donc de l'ensemble. En d'autres termes, le réglage du jeu existant entre la vis irréversible (6) et le corps (7) est affiné par l'action de la vis réversible (9) et la coopération de cette dernière avec le ressort (10).

A cet effet, en l'absence de contrainte supérieure au seuil fixé par construction, le jeu existant entre la vis irréversible (6) et l'écrou irréversible ou corps (7) est compris entre 0,3 et 1 millimètre, c'est-à-dire que l'épaisseur des filets (23) de la vis irréversible (6) est typiquement inférieure d' 1 millimètre à la largeur définie par les filets du corps (7) sur toute la distance d'interaction entre les filets respectifs. En outre, ce jeu peut également résulter de la différence entre le diamètre extérieur des filets (23) au niveau de leur extension maximum et le diamètre le plus profond des filets du corps (7). Cette différence peut typiquement être voisine de 0,5 millimètre.

C'est la vis réversible (9) et l'action sur cette dernière du ressort (10) qui, en quelque sorte, assure la sustentation de la vis irréversible (6) au sein du corps (7) en l'absence de contraintes inférieures au seuil fixé par construction, et donc corollairement sa rotation possible au sein dudit corps.

En revanche, dès lors que la contrainte excède ledit seuil, il y a contact plus ferme et frottement entre la vis irréversible (6) et le corps (7), et corollairement, blocage de la rotation de ladite vis au sein du corps (7).

Dans l'exemple décrit, le treuil de levage est typiquement un treuil de 140 tonnes, nécessitant un effort de blocage voisin de 40 tonnes. L'amplitude du déplacement des extrémités du palonnier est voisine de 30 millimètres. Les éléments constitutifs de dispositif de l'invention sont dimensionnés en conséquence. Ainsi, la vis irréversible (6) est par exemple réalisée en alliage léger, tel que par exemple en aluminium AU4G ou encore en titane, de manière à limiter son inertie, et corollairement, minimiser l'effort de tarage du ressort (10). Au demeurant, l'angle défini par les filets respectifs, et le pas peuvent également jouer pour permettre le fonctionnement souhaité du dispositif. Avantageusement, l'angle des filets de la vis irréversible (6) est plus faible que l'angle des filets du corps (7). Ce faisant, on optimise la compacité de l'ensemble du dispositif de l'invention. Le jeu réalisé par construction entre la vis irréversible (6) et le corps (7) est également un paramètre à prendre en considération : typiquement, il est voisin de 0,5 millimètre.

Par ailleurs, le caractère réversible du couple vis (9) - écrou (8) est optimisé, par exemple en mettant en oeuvre un couple vis à billes (pas de 20 millimètres par exemple) - écrou à billes.

Dans l'exemple décrit, ce dispositif de blocage fonctionne pour les efforts en compression.

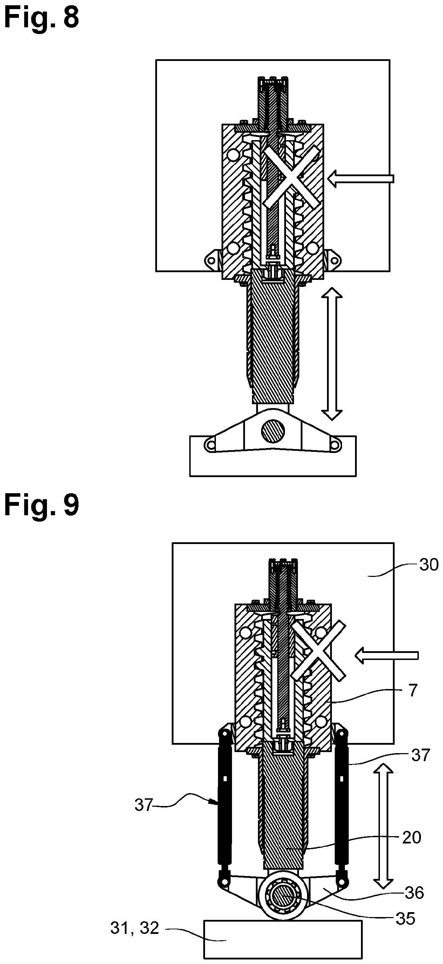

Cependant, le dispositif de l'invention peut également fonctionner en traction, voire dans les deux sens de traction et compression. On a ainsi représenté, en relation avec la figure 8, le dispositif de l'invention en fonctionnement dans les deux directions. En l'espèce, le dispositif est mis en oeuvre dans le cadre d'une butée sismique. Ainsi, il est solidarisé respectivement aux fondations d'un ouvrage de génie civil et à l'ouvrage proprement dit.

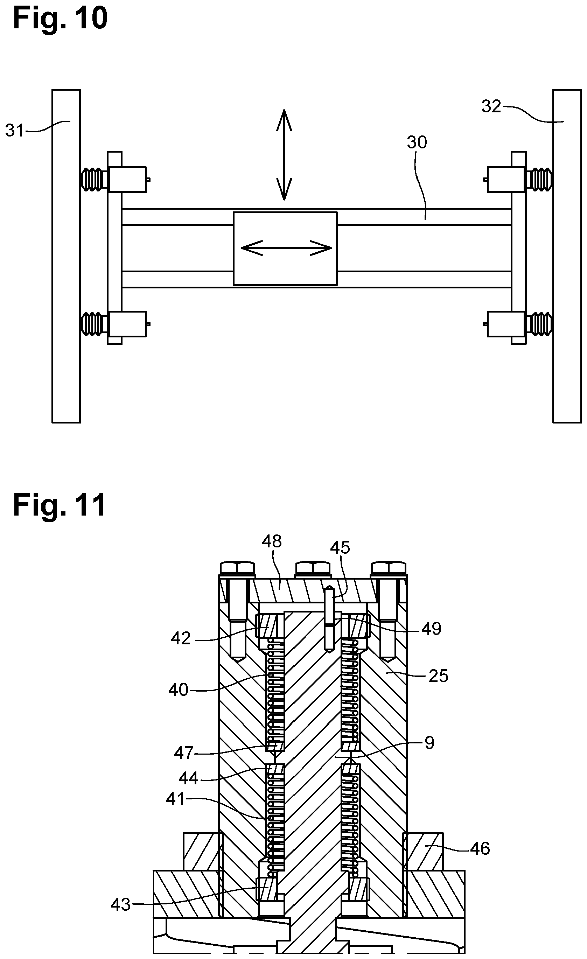

Au sein des figures 9 et 10, on a représenté le dispositif de l'invention au niveau d'un pont roulant (30). Ce dernier est susceptible de se déplacer horizontalement selon la double flèche de la figure 10. Afin de préserver son intégrité en cas de choc sismique, les deux extrémités latérales (31, 32) du pont intègrent quatre dispositifs de l'invention, dont l'une des parties est susceptible de prendre appui sur les murs porteurs (33, 34), et de se déplacer contre la paroi interne desdits murs. A cet effet, le poussoir (20) est solidaire d'un galet (35) monté en libre rotation sur un support (36). Par ailleurs, afin de maintenir ledit galet (35) contre la paroi interne du mur, des vérins à gaz (37), sont solidarisés respectivement au corps (7) et au support (36).

Ce faisant, l'ensemble permet de suivre les défauts de planéités de la paroi interne des murs (31, 32) sans affecter le fonctionnement du pont roulant (30) quoi se déplace horizontalement à basse vitesse. En revanche, en cas d'accélération liée à un choc sismique, le dispositif de l'invention engendre le blocage du pont et corollairement l'impossibilité pour ce dernier de se déplacer.

On a représenté en relation avec la figure 11, une vue de détail de la partie supérieure de la figure 7, dans le cas particulier du déplacement possible de la vis réversible (9) dans les deux sens.

A cet effet, il n'est plus mis en oeuvre un ressort de contrainte, mais deux (40, 41), coaxiaux :
- un ressort inférieur (41) monté entre une butée inférieure (43) et une saillie annulaire radiale inférieure (44), émanant de la vis (9) ;
- un ressort supérieur (40), monté entre une butée supérieure (42) et une saillie annulaire radiale supérieure (47), émanant également de la vis (9).

Ces deux ressorts sont aptes à agir sur l'un des éléments constitutifs des couples vis-écrou de telle sorte à générer deux seuils de contrainte distincts, respectivement selon les deux sens du mouvement linéaire entre les deux structures (1, 2).

Les butées respectives inférieure (43) et supérieure (42), solidaires de la cloche de maintien (25) permettent de régler le tarage des ressorts (40) et (41).

Ce faisant, il devient possible de définir un seuil de déclenchement différent en fonction d'une traction ou d'une compression, en jouant sur le tarage et la constante de raideur des deux ressorts (40) et (41) et sur les butées (42) et (43).

En outre, il est également envisageable de procéder à un réglage fin du jeu défini par construction entre la vis irréversible (6) et le corps (7) (de la figure 7). A cet effet, la cloche de maintien (25) est montée rotative par rapport à l'axe (27), son blocage selon la position souhaitée étant assuré au moyen de d'un écrou (46). Le couvercle (48), solidaire de la cloche de maintien (25), est muni d'une goupille (45) dirigée vers le bas. Cette goupille (45) est reçue librement dans un alésage (49) ménagé au niveau de l'extrémité supérieure de la vis réversible (9). En d'autres termes, ladite vis réversible glisse sans contrainte, ou quasiment sans contrainte le long de la goupille.

Par simple rotation de la cloche de maintien, qui engendre la rotation de la vis réversible (9), il devient donc possible d'ajuster le jeu entre la vis irréversible (6) et le corps (7), de par l'action de la goupille (45) sur la vis réversible (9) d'une part, et en raison des liaisons vis-écrou ou de solidarité existant entre les deux couples vis-écrou. Une fois ce réglage fin réalisé, on bloque la rotation de la cloche de maintien au moyen de l'écrou (46).

Quel que soit le mode de réalisation de l'invention, dès lors que la contrainte exercée sur le dispositif repasse sous le seuil défini, tel que décrit précédemment, le fonctionnement de ce dernier revient automatiquement en mode réversible, en raison de l'action du ressort qui repousse la vis réversible dans sa position d'origine.

On conçoit tout l'intérêt de la présente invention, qui permet de manière simple, efficace et selon un encombrement réduit de bloquer le déplacement linéaire relatif entre deux structures, et ce, dans une plage de contraintes très étendue.

## Revendications

1. Dispositif de blocage mécanique d'un mouvement linéaire entre deux structures (1, 2), ce dispositif comprenant un premier élément (4) solidaire de l'une (1) desdites structures, et un second élément (5, 20) solidaire avec ou en appui contre l'autre (2) desdites deux structures, lesdits premier et second éléments coopérant linéairement l'un avec l'autre au moyen d'un double couple vis-écrou coaxiaux, **caractérisé :**
• **en ce que** le double couple vis-écrou est constitué :
■ d'un premier couple vis-écrou constitué d'une vis dite réversible (9) et d'un écrou (8) coopérant sans contrainte ou quasiment sans contrainte avec ladite vis réversible ;
■ d'un second couple vis-écrou constitué d'une vis dite irréversible (6) et d'un écrou (7) coopérant avec ladite vis irréversible, la coopération entre ces deux éléments présentant un jeu déterminé ;
l'un des éléments du premier couple étant solidaire de l'un des éléments du second couple, de sorte que la rotation de l'un inhérente au déplacement linéaire relatif dudit premier élément par rapport au second élément, entraîne la rotation de l'autre ;
• et **en ce que** le dispositif comprend au moins un moyen élastique (10), apte à agir sur l'un des éléments constitutifs des couples vis-écrou précités, de telle sorte :
■ à maintenir le jeu vis-écrou dudit second couple lorsque la contrainte est inférieure à un seuil fixé par construction, ladite contrainte correspondant à une vitesse de rotation de l'un des éléments du couple ; et
■ à engendrer le blocage de la coopération des éléments du second couple vis irréversible-écrou au-delà dudit seuil de contrainte.

2. Dispositif de blocage mécanique d'un mouvement linéaire entre deux structures (1, 2) selon la revendication 1, ***caractérisé* en ce que** la vis réversible (9) du premier couple vis-écrou est solidaire de la vis irréversible (6) du second couple vis - écrou, et **en ce que** le moyen élastique (10) est solidarisé aux deux écrous de chacun desdits couples.

3. Dispositif de blocage mécanique d'un mouvement linéaire entre deux structures (1, 2) selon la revendication 1, ***caractérisé* en ce que** la vis irréversible (6) du second couple vis - écrou est solidaire de l'écrou réversible (8) du premier couple vis - écrou, et **en ce que** le moyen élastique agit sur la vis réversible (9).

4. Dispositif de blocage mécanique d'un mouvement linéaire entre deux structures (1, 2) selon l'une des revendications 1 à 3, ***caractérisé* en ce qu'**en l'absence de contrainte supérieure au seuil fixé par construction, le jeu existant entre la vis irréversible (6) et l'écrou irréversible (7) résulte de la différence entre l'épaisseur des filets (23) dont est munie la vis irréversible (6) et la largeur des filets de l'écrou irréversible (7).

5. Dispositif de blocage mécanique d'un mouvement linéaire entre deux structures (1, 2) selon la revendication 4, ***caractérisé* en ce que** cette différence est comprise entre 0,3 et 1 millimètres.

6. Dispositif de blocage mécanique d'un mouvement linéaire entre deux structures (1, 2) selon l'une des revendications 1 à 5, ***caractérisé* en ce qu'**en l'absence de contrainte supérieure au seuil fixé par construction, le jeu existant entre la vis irréversible (6) et l'écrou irréversible (7) résulte de la différence entre le diamètre extérieur des filets (23) dont est munie la vis irréversible (6) au niveau de leur extension maximum et le diamètre le plus profond des filets du corps (7).

7. Dispositif de blocage mécanique d'un mouvement linéaire entre deux structures (1, 2) selon la revendication 6, ***caractérisé* en ce que** cette différence est voisine de 0,5 millimètres.

8. Dispositif de blocage mécanique d'un mouvement linéaire entre deux structures (1, 2) selon l'une des revendications 3 à 7, ***caractérisé* en ce que** le réglage du jeu existant entre la vis irréversible (6) et l'écrou irréversible est affiné par rotation de la vis réversible (9) sous l'action d'une cloche de maintien (25) recevant l'extrémité de ladite vis réversible (9) et le moyen élastique (10).

9. Dispositif de blocage mécanique d'un mouvement linéaire entre deux structures (1, 2) selon la revendication 1, ***caractérisé* en ce qu'**il comprend deux moyens élastiques (40, 41) aptes à agir sur l'un des éléments constitutifs des couples vis-écrou de telle sorte à générer deux seuils de contrainte distincts, respectivement selon les deux sens du mouvement linéaire entre les deux structures (1, 2).

10. Butée de mécanisme oscillant, du type palonnier (11) d'un treuil de levage, montée sur les deux extrémités libres dudit palonnier au voisinage de la zone de fixation des câbles de levage, ladite butée comprenant un dispositif de blocage selon l'une des revendications 1 à 8.

11. Butée sismique destinée à être montée sur un ouvrage de génie civil ou sur un pont roulant, comprenant un dispositif de blocage selon l'une des revendications 1 à 9.

## Patentansprüche

1. Mechanische Vorrichtung zum Blockieren einer linearen Bewegung zwischen zwei Strukturen (1, 2), wobei diese Vorrichtung ein erstes Element (4), das fest mit einer (1) der genannten Strukturen verbunden ist, und ein zweites Element (5, 20) umfasst, das fest mit der anderen (2) der beiden Strukturen verbunden ist oder an dieser anliegt, wobei das erste und das zweite Element einer doppelten koaxialen Schrauben-Mutter-Kombination linear miteinander zusammenwirken, ***dadurch gekennzeichnet:***
• **dass** die doppelte koaxiale Schrauben-Mutter-Kombination umfasst:
▪ eine erste Schrauben-Mutter-Kombination, die aus einer sogenannten reversiblen Schraube (9) und einer Mutter (8) besteht, die ohne oder nahezu ohne Beanspruchung mit der reversiblen Schraube zusammenwirkt;
▪ eine zweite Schrauben-Mutter-Kombination, die aus einer sogenannten irreversiblen Schraube (6) und einer Mutter (7) besteht, die mit der irreversiblen Schraube zusammenwirkt, wobei das Zusammenwirken zwischen diesen beiden Elementen ein festgelegtes Spiel aufweist;
wobei eines der Elemente der ersten Kombination fest mit einem der Elemente der zweiten Kombination verbunden ist, so dass die Drehung des einen Elements, die mit der relativen linearen Bewegung des ersten Elements in Bezug auf das zweite Element einhergeht, die Drehung des anderen Elements bewirkt;
• und **dass** diese Vorrichtung mindestens ein elastisches Mittel (10) umfasst, das in der Lage ist, auf eines der Bestandteile der oben genannten Schrauben-Mutter-Kombinationen einzuwirken, so dass:
▪ das Spiel zwischen Schraube und Mutter der zweiten Kombination beibehalten wird, wenn die Beanspruchung unter einem konstruktionsbedingten Schwellenwert liegt, wobei die Beanspruchung einer Drehgeschwindigkeit eines der Elemente der Kombination entspricht; und
▪ die Blockierung des Zusammenwirkens der Elemente der zweiten Kombination aus irreversibler Schraube und Mutter oberhalb des Beanspruchungsschwellenwertes erzeugt wird.

2. Mechanische Vorrichtung zum Blockieren einer linearen Bewegung zwischen zwei Strukturen (1, 2) nach Anspruch 1, ***dadurch gekennzeichnet,* dass** die reversible Schraube (9) der ersten Schrauben-Mutter-Kombination fest mit der irreversiblen Schraube (6) der zweiten Schrauben-Mutter-Kombination verbunden ist, und dass das elastische Mittel (10) fest mit den beiden Muttern jeder dieser Kombinationen verbunden ist.

3. Mechanische Vorrichtung zum Blockieren einer linearen Bewegung zwischen zwei Strukturen (1, 2) nach Anspruch 1, ***dadurch gekennzeichnet,* dass** die irreversible Schraube (6) der zweiten Schrauben-Mutter-Kombination fest mit der reversiblen Mutter (8) der ersten Schrauben-Mutter-Kombination verbunden ist, und dass das elastische Mittel (10) auf die reversible Schraube einwirkt.

4. Mechanische Vorrichtung zum Blockieren einer linearen Bewegung zwischen zwei Strukturen (1, 2) nach einem der Ansprüche 1 bis 3, ***dadurch gekennzeichnet,* dass**, wenn keine Beanspruchung oberhalb des konstruktionsbedingten Schwellenwerts vorliegt, das zwischen der irreversiblen Schraube (6) und der irreversiblen Mutter (7) bestehende Spiel aus der Differenz zwischen der Dicke der Gewinde (23), mit denen die irreversible Schraube (6) versehen ist, und der Breite der Gewinde der irreversiblen Mutter (7) resultiert.

5. Mechanische Vorrichtung zum Blockieren einer linearen Bewegung zwischen zwei Strukturen (1, 2) nach Anspruch 4, ***dadurch gekennzeichnet,* dass** diese Differenz zwischen 0,3 und 1 Millimeter beträgt.

6. Mechanische Vorrichtung zum Blockieren einer linearen Bewegung zwischen zwei Strukturen (1, 2) nach einem der Ansprüche 1 bis 5, ***dadurch gekennzeichnet,* dass**, wenn keine Beanspruchung oberhalb des konstruktionsbedingten Schwellenwerts vorliegt, das zwischen der irreversiblen Schraube (6) und der irreversiblen Mutter (7) bestehende Spiel aus der Differenz zwischen dem Außendurchmesser der Gewinde (23), mit dem die irreversible Schraube (6) an ihrer maximalen Ausbuchtung versehen ist, und dem tiefsten Durchmesser der Gewinde des Körpers (7) resultiert.

7. Mechanische Vorrichtung zum Blockieren einer linearen Bewegung zwischen zwei Strukturen (1, 2) nach Anspruch 6, ***dadurch gekennzeichnet,* dass** diese Differenz zwischen 0,5 und 1 Millimeter beträgt.

8. Mechanische Vorrichtung zum Blockieren einer linearen Bewegung zwischen zwei Strukturen (1, 2) nach einem der Ansprüche 3 bis 7, ***dadurch gekennzeichnet,* dass** die Einstellung des zwischen der irreversiblen Schraube (6) und der irreversiblen Mutter bestehenden Spiels durch Drehung der reversiblen Schraube (9) unter der Wirkung einer Halteglocke (25), die das Ende der reversiblen Schraube (9) und das elastische Mittel (10) aufnimmt, feinabgestimmt wird.

9. Mechanische Vorrichtung zum Blockieren einer linearen Bewegung zwischen zwei Strukturen (1, 2) nach Anspruch 1, ***dadurch gekennzeichnet,* dass** sie zwei elastische Mittel (40, 41) umfasst, die in der Lage sind, auf eines der Bestandteile der Schrauben-Mutter-Kombinationen so einzuwirken, dass zwei unterschiedliche Beanspruchungsschwellen jeweils in den beiden Richtungen der linearen Bewegung zwischen den beiden Strukturen (1, 2) erzeugt werden.

10. Anschlag für einen Schwingmechanismus vom Typ Traverse (11) einer Hubwinde, der an den beiden freien Enden der Traverse im Bereich der Befestigungsstelle der Hubseile angebracht ist, wobei der Anschlag eine Vorrichtung zum Blockieren nach einem der Ansprüche 1 bis 8 umfasst.

11. Seismisches Widerlager zur Montage an einem Bauwerk des Hoch- oder Tiefbaus oder an einem Brückenkran, das eine Vorrichtung zum Blockieren nach einem der Ansprüche 1 bis 9 umfasst.

## Claims

1. Device for mechanically blocking a linear movement between two structures (1, 2), this device comprising a first element (4) secured to one (1) of said structures, and a second element (5, 20) secured to or bearing against the other (2) of said two structures, said first and second elements cooperating linearly with one another by means of a double coaxial screw-and-nut pair, **characterised:**
• **in that** the double screw-nut pair consists of:
■ a first screw-nut pair consisting of a so-called reversible screw (9) and a nut (8) cooperating without stress or almost without stress with said reversible screw;
■ a second screw-nut pair consisting of a so-called irreversible screw (6) and a nut (7) cooperating with said irreversible screw, the cooperation between these two elements having a determined clearance;
one of the elements of the first pair being secured to one of the elements of the second pair, such that the rotation of one inherent to the relative linear movement of said first element with respect to the second element, rotates the other;
• and **in that** the device comprises at least one elastic means (10), capable of acting on one of the constituent elements of the mentioned above screw-nut pairs, so as to:
■ maintain the screw-and-nut clearance of said second pair when the stress is less than a threshold fixed by construction, said stress corresponding to a rotational speed of one of the elements of the pair; and
■ cause the blocking of the cooperation of the elements of the second irreversible screw-and-nut pair beyond said stress threshold.

2. Device for mechanically blocking a linear movement between two structures (1, 2) according to claim 1, ***characterized* in that** the reversible screw (9) of the first screw-and-nut pair is secured to the irreversible screw (6) of the second screw-and-nut pair, and **in that** the elastic means (10) is secured to the two nuts of each of said pairs.

3. Device for mechanically blocking a linear movement between two structures (1, 2) according to claim 1, ***characterised* in that** the irreversible screw (6) of the second screw-and-nut pair is secured to the reversible nut (8) of the first screw-and-nut pair, and **in that** the elastic means acts on the reversible screw (9).

4. Device for mechanically blocking a linear movement between two structures (1, 2) according to one of claims 1 to 3, ***characterized* in that** in the absence of stress greater than the threshold fixed by construction, the clearance existing between the irreversible screw (6) and the irreversible nut (7) results from the difference between the thickness of the threads (23) with which the irreversible screw (6) is provided, and the width of the threads of the irreversible nut (7).

5. Device for mechanically blocking a linear movement between two structures (1, 2) according to claim 4, ***characterised* in that** this difference is between 0.3 and 1 millimetre.

6. Device for mechanically blocking a linear movement between two structures (1, 2) according to one of claims 1 to 5, ***characterized* in that** in the absence of stress greater than the threshold fixed by construction, the clearance existing between the irreversible screw (6) and the irreversible nut (7) results from the difference between the outer diameter of the threads (23) with which the irreversible screw (6) is provided, at their maximum extension and the deepest diameter of the threads of the body (7).

7. Device for mechanically blocking a linear movement between two structures (1, 2) according to claim 6, ***characterized* in that** this difference is close to 0.5 millimetre.

8. Device for mechanically blocking a linear movement between two structures (1, 2) according to one of claims 3 to 7, ***characterized* in that** the adjustment of the clearance existing between the irreversible screw (6) and the irreversible nut is refined by rotation of the reversible screw (9) under the action of a holding bell (25) receiving the end of said reversible screw (9) and the elastic means (10).

9. Device for mechanically blocking a linear movement between two structures (1, 2) according to claim 1, ***characterised* in that** it comprises two elastic means (40, 41) capable of acting on one of the constituent elements of the screw-and-nut pairs so as to generate two distinct stress thresholds, respectively in the two directions of the linear movement between the two structures (1, 2).

10. Stop for an oscillating mechanism, of the spreader beam (11) type of a hoisting winch, mounted on the two free ends of said spreader beam close to the zone for fixing the hoisting cables, said stop comprising a blocking device according to one of claims 1 to 8.

11. Seismic stop intended to be mounted on a civil engineering structure or on a bridge crane, comprising a blocking device according to one of claims 1 to 9.
